# EUROPEAN PATENT APPLICATION

(11) **EP 1 492 340 A1**
(43) Date of publication of application: **29.12.2004**
(21) Application number: 03715442.4
(22) Date of filing: 26.03.2003
(51) Int. Cl.: H04N 5/91, H04N 5/85, G11B 20/10

(54) **RECORDING MEDIUM REPRODUCTION DEVICE**

(30) Priority: 27.03.2002 JP 2002087334
(71) Applicant: Sanyo Electric Co., Ltd., Moriguchi-shi, Osaka-fu 570-8677 (JP); Sanyo Technosound Co., Ltd., Daito-shi, Osaka 574-8534 (JP)
(72) Inventor: TERASHIMA, Takao, Kyotanabe-shi, Kyoto 610-0354 (JP); KONISHI, Tadashi, Takatsuki-shi, Osaka 569-1041 (JP); KIMURA, Mari, Higashiosaka-shi, Osaka 579-8021 (JP); UENAKA, Yoshiro, Ibaraki-shi, Osaka 567-0862 (JP)
(74) Representative: Urner, Peter, Dipl.-Phys.
(86) International application number: PCT/JP2003/003753
(87) International publication number: WO 2003/081909

(57) **Abstract**

In a recording medium reproducing apparatus, a storage means in which reproduction limit information is stored is a rewritable non-volatile memory, and the recording medium reproducing apparatus includes a control unit which reads reproduction limit information from the non-volatile memory and compares this reproduction limit information with reproduction limit information recorded on a recording medium. Then, the reproduction limit information can be set under the condition that the reproduction limit information has not yet been set in the non-volatile memory. Broadcasting format information is stored in the non-volatile memory, and the control unit reads the broadcasting format information from the non-volatile memory and performs control in accordance with the broadcasting format indicated by the broadcasting format information. In the recording medium reproducing apparatus, the broadcasting format information can be set or changed under the condition that the reproduction limit information has not yet been set in the non-volatile memory.

## Description

### TECHNICAL FIELD

This invention relates to a recording medium reproducing apparatus for reproducing recording media, such as DVDs (Digital Versatile Disks). More specifically, the invention relates to a recording medium reproducing apparatus, which reproduces a recording medium when the reproduction limit information that is specific to the recording medium reproducing apparatus matches the reproduction limit information on the recording medium.

### BACKGROUND ART

Optical disks are widely used as recording media for moving images and other content, and especially recordable DVD-Video disks, which allow the recording of high quality and long duration moving images, are becoming popular rapidly. With the DVD-Video disk (below, DVD disk) and the DVD-Video player (below, DVD player), the standard for reproduction limits was determined internationally, in order to provide international protection of content creators' copyrights. In accordance with this standard, if the reproduction limit information of the DVD player does not match that recorded on the DVD disk, it is determined that the DVD player will not reproduce the DVD disk.

More specifically, reproduction limit information corresponding to the region in which the DVD player is used, that is, region information, is set in each individual DVD player, and region information corresponding to the region where the DVD disk is sold (used) is recorded on each individual DVD disk. Furthermore, a regional management flag indicating whether or not to perform protection based on the above standard is recorded on the DVD disks. If the regional flag indicates that copyright protection is to be performed, then the DVD player retrieves the region information from the inserted DVD disk, and compares that region information with the region information set for the player itself. If the region information matches, then the recorded information of the moving images or the like that are recorded on the DVD disk is reproduced, and if the region information is different, then the recorded information is not reproduced.

Currently, regional numbers (regional codes) that are assigned to predetermined regions are used for the region information. More specifically, 1 corresponds to North America, 2 corresponds to Japan and Europe among others, 3 corresponds to Southeast Asia for example, 4 corresponds to Central and South America for example, 5 corresponds to Russia and Eastern Europe among others, and 6 corresponds to China. Codes 7 and 8 are not yet used.

The DVD player needs to be configured such that ordinary users are not able to change the regional codes. In conventional DVD players, the regional codes specific to the DVD players were included in a program for controlling the DVD player and were stored in a ROM. This control program processes the information that is sent from internal devices of the DVD player, and encompasses various procedures in order to send operational commands to these devices, and is executed in a CPU connected to the ROM. The control program also includes a procedure for comparing regional codes.

However, when conventional DVD players were sold in a plurality of regions with different regional codes, then control programs that differed according to regional codes were stored in the ROM. In addition, currently, among the broadcasting formats which are widely used throughout the world, there is the NTSC format, which is used in Japan for example, and the PAL format, which is used in England among others. In conventional DVD players, the program that was stored in the ROM differed for each broadcasting format, thus making the DVD player compatible to the broadcasting format used in the region where the DVD player was sold.

Consequently, when a given DVD player was sold throughout the world, several differing control programs depending on the regional codes and broadcasting formats were necessary. Manufacturers had to create, test, and manage these control programs, and these tasks placed a large burden on the manufacturers for the manufacturing process of the DVD players. Furthermore, when transitioning to the next version of the control program, it was necessary to change and test several control programs, so that when it was not possible to upgrade some of these control programs at the time of goods shipment, a situation arose where the features of the DVD players differed according to the region in which they were sold.

Furthermore, if control programs that differ according to the sales region are stored in ROM, then it is difficult to adapt the manufacturing process flexibly and quickly to changes in the sales region of the DVD players. When the number of products sold in a region corresponding to a given regional code increases, it is necessary to newly manufacture products having a ROM in which the control program corresponding to this region is stored. Alternatively, the ROMs of already manufactured product must be exchanged. If it were possible to set the regional code and the broadcasting format without exchanging the ROM after assembling the product, then it would be easy to mark products that were supposed to be sold in a region corresponding to one regional code for sale in a region corresponding to another regional code, which is preferable with regard to reducing inventories and shortening delivery periods.

The present invention was made in order to solve the above problems, and provides a recording medium reproducing apparatus which can use the same control program even when the reproduction limit information specific to the apparatus or the broadcasting format to which the apparatus is adapted differ, and with which reproduction limit information, such as region information, and broadcasting format can be set in the manufacturing process even after assembly of the recording medium reproducing apparatus. Additionally, the invention provides a recording medium reproducing apparatus in which ordinary users cannot change the reproduction limit information and the broadcasting format.

### DISCLOSURE OF THE INVENTION

The recording medium reproducing apparatus of this invention comprises a storage means in which first reproduction limit information is stored, the recording medium reproducing apparatus comparing the first reproduction limit information with second reproduction limit information which is recorded on a recording medium, and reproducing recording information recorded on the recording medium if the first and the second reproduction limit information match, wherein the storage means is a rewritable non-volatile memory, and wherein the recording medium reproducing apparatus comprises a control unit which reads the first reproduction limit information from the non-volatile memory and compares the first reproduction limit information with the second reproduction limit information.

With the recording medium reproduction apparatus of the present invention, the reproduction limit information is stored in the non-volatile memory, and the control unit reads the reproduction limit information from this non-volatile memory, and compares the read reproduction limit information with the reproduction limit information recorded on the recording medium. With this configuration, the same control program for the processing of the control unit and the control procedures can be used for a plurality of recording medium reproduction apparatuses with different reproduction limit information, and the recording content of the ROM storing this control program can be made identical. Moreover, because the reproduction limit information is stored in the rewritable non-volatile memory, the desired regional code can be easily set in the manufacturing process after assembling the reproducing apparatus for the recordable medium.

Furthermore, in a recording medium reproducing apparatus of the present invention, the first reproduction limit information can be stored in the non-volatile memory under the condition that information indicating that the reproduction limit information has not yet been set is stored in the non-volatile memory instead of the reproduction limit information. Consequently, once the manufacturer has set the reproduction limit information in the non-volatile memory, the recording medium reproducing apparatus can never again assume a state in which the reproduction limit information can be stored again, and the reproduction limit information stored in the non-volatile memory is maintained. That is, an ordinary user is not able to rewrite the reproduction limit information.

Moreover, in a recording medium reproducing apparatus of the present invention, broadcasting format information is stored in the non-volatile memory in addition to the reproduction limit information, and the control unit reads the broadcasting format information from the non-volatile memory and performs control in accordance with the broadcasting format indicated by the broadcasting format information. With this configuration, it is possible to write a control program that is selectively compatible with a plurality of broadcasting formats. Consequently, the same control program can be used and the recording content of the ROM storing the control program can be made identical, even if the content of the reproduction limit information to be held by the recording medium reproducing apparatus is different, or the broadcasting format to which the recording medium reproducing apparatus should be compatible is different. Moreover, because the broadcasting format information is stored in the non-volatile memory, the broadcasting format information can be easily set or changed in the manufacturing process after assembling the reproducing apparatus for the recordable medium.

Moreover, in a recording medium reproducing apparatus of the present invention, the broadcasting format information can be set or changed under the condition that information indicating that the first reproduction limit information has not yet been set is stored in the non-volatile memory instead of the first reproduction limit information. With this configuration, once the manufacturer has set the reproduction limit information in the non-volatile memory, the recording medium reproducing apparatus can never again assume a state in which the broadcasting format information can be set again or changed, and the broadcasting format information stored in the non-volatile memory is maintained. That is, an ordinary user is not able to rewrite the broadcasting format information.

### BRIEF EXPLANATION OF THE DRAWINGS

FIG. 1 is a block diagram showing an outline of a recording medium reproducing apparatus according to the present invention.

FIG. 2 is a block diagram showing an outline of the control unit of a recording medium reproducing apparatus according to the present invention.

FIG. 3 is a flowchart showing the operation for setting the regional code and the broadcasting format in a recording medium reproducing apparatus according to the present invention.

FIG. 4 is a diagram of a settings screen displayed on a display apparatus, which is directly connected to the recording medium reproducing apparatus, in a setting enabled state.

### BEST MODE FOR CARRYING OUT THE INVENTION

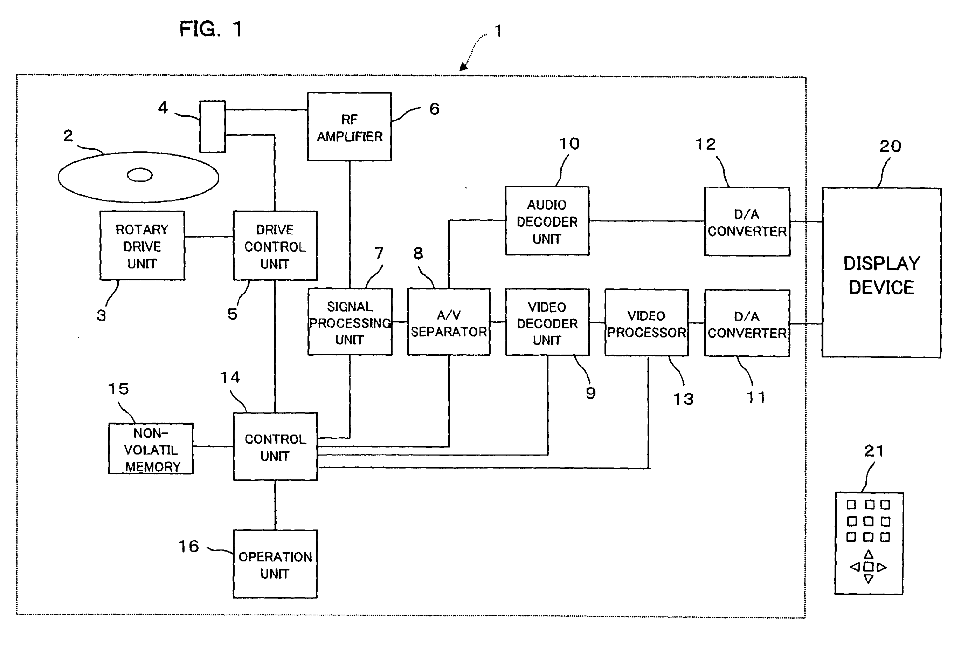

Below, a working example of the present invention is explained with reference to the drawings. FIG.1 is a block diagram showing an outline of a recording medium reproducing apparatus according to the present invention. In this working example, the recording medium reproducing apparatus (1) is a DVD player, and the recording medium (2) is a DVD disk. In addition to such recording information as moving images and audio, also a regional code as described above is stored as reproduction limit information on the recording medium (2).

The recording medium (2) is placed on a turntable of a rotary drive unit (3). The rotary drive unit (3) is equipped with a spindle motor, which has a rotary shaft connected to the turntable, and the recording medium (2) is rotated by the driving of this spindle motor. A pick-up unit (4) includes an optical pickup detecting the recording information on the recording medium (2) and a mechanism for moving the optical pickup. The optical pickup, while moving near the recording surface of the recording medium (2), irradiates a laser beam onto the recording surface and detects the reflected light from the recording surface. The optical pickup converts the light reflected into an electrical signal. The drive control unit (5) performs the necessary servo control for operation of this rotary drive unit (3) and the pickup unit (4).

The electrical signal from the optical pickup unit (4) is amplified by an RF amplifier (6) and is output to a signal processing unit (7). The signal processing unit (7) digitizes this electrical signal and performs a demodulation process in order to provide the digital signal with a predetermined data format. The A/V separator (8) divides the digital signal that was output from the signal processing unit (7) into an image information signal and an audio information signal and outputs these signals to a video decoder unit (9) and an audio decoder unit (10), respectively.

The recording information is recorded on the recording medium (2) with compression by a predetermined compression scheme. With the video decoder unit (9) decoding the image information signal and the audio decoder unit (10) decoding audio information signal, the uncompressed video information signal and audio information signal are output. The video information signal and the audio information signal are converted by D/A converters (11) and (12), respectively, to video and audio output and output to a display device (20). The image information signal is output to the D/A converter (11) through a video processor (13). The image information includes moving image information and subpicture information such as subtitles and selection screen, and, when necessary, the video processor (13) generates an image information signal combining the moving image information signal and the subpicture information signal.

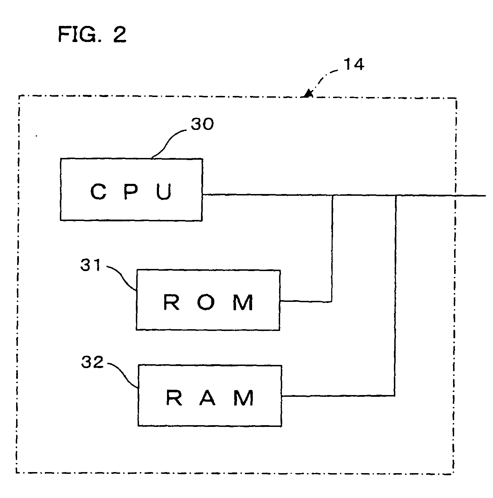

A control unit (14) processes the data which is received from the internal devices, such as the signal processing unit (7), and by giving operational commands to these internal devices, the control unit (14) lets the recording medium reproducing apparatus (1) perform predetermined operations. As shown in FIG. 2, the control unit (14) includes a CPU (30) performing various arithmetic processes, a ROM (31) in which a control program is stored which describes the necessary process procedures, and a RAM (32) which temporarily stores processing data.

Referring once more to FIG. 1, a rewritable non-volatile memory (15) is connected to the control unit (14). In this working example, an EEPROM is used for the non-volatile memory (15). This EEPROM stores the regional code that corresponds to the region in which the recording medium reproducing apparatus (1) is used, as well as the broadcasting format information, which indicates the various broadcasting formats.

An operation unit (16) is connected to the control unit (14). The operation unit is equipped with the necessary various buttons for operating the recording medium reproducing apparatus (1), and outputs signals corresponding to these buttons to the control unit (14). The operation unit (16) is connected to the control unit (14). It is also possible to operate the recording medium reproducing apparatus (1) with a remote controller (21). The operation unit (16) converts the optical signal that was sent by the remote controller (21) into an electrical signal and outputs it to the control unit (14).

The following is an explanation of the processing performed by the control unit (14) using the non-volatile memory (15). First, the processing for comparing the regional codes is explained. The video decoder unit (9) decodes the image information signal, separates the regional code information of the recording medium (2) which is attached to the image information signal, and outputs the code to the control unit (14). The control unit (14) reads from the non-volatile memory (15) the regional code that is specific to the recording medium reproducing apparatus (1) stored in the non-volatile memory (15). Then, the control unit (14) compares the regional code of the recording medium (2) with the regional code of the non-volatile memory (15), and if these regional codes differ, sends a command to stop reproduction of the recording medium (2) to the appropriate internal devices.

In conventional recording medium reproducing apparatuses, the regional codes were included in the control program, and were stored in the ROM (31) of the control unit (14), and there were control programs that differed for each regional code. In the recording medium reproducing apparatus (1) of the present invention, the regional code specific to the apparatus is stored in the non-volatile memory (15), and the control unit (14) reads this regional code. Thus, it is possible to use the same control program in the recording medium reproducing apparatus (1) for any regional code, and it is possible to make the contents that are recorded in the ROM (31) consistent.

In addition to the regional codes, broadcasting format information is also stored in the non-volatile memory (15). For this working example, as the broadcasting format information, a value of "0" indicating the PAL format or a value of "1" indicating the NTSC format is stored in the non-volatile memory (15). The control program is written so that it can handle these broadcasting formats selectively. That is to say, in the control program, the processing of PAL and NTSC is arranged in parallel for those portions in which the processing procedure or parameters differ for different broadcasting formats, and the control unit (14) reads out the above-mentioned numerical values stored in the non-volatile memory (15), and performs the processing corresponding to the broadcasting format indicated by those numerical values.

In conventional recording medium reproducing apparatuses, the control program corresponding to a predetermined broadcasting format was stored in the ROM (31) of the control unit (14). In the recording medium reproducing apparatus (1) of the present invention, the control program is configured in the manner described above, and broadcasting format information indicating the broadcasting format is stored in the non-volatile memory (15), which is connected to the control unit (14), so that it is possible to use one control program for differing broadcasting formats. The contents stored in the ROM (31) are the same, regardless of the broadcasting format to which the apparatus must be compatible.

The following is an explanation of the setting of the regional code and the broadcasting format in the recording medium reproducing apparatus (1). This setting operation is performed by the manufacturer, for example before shipping of the recording medium reproducing apparatus (1), in order to set the regional code and the broadcasting format of the region in which the recording medium reproducing apparatus (1) is sold in the non-volatile memory (15).

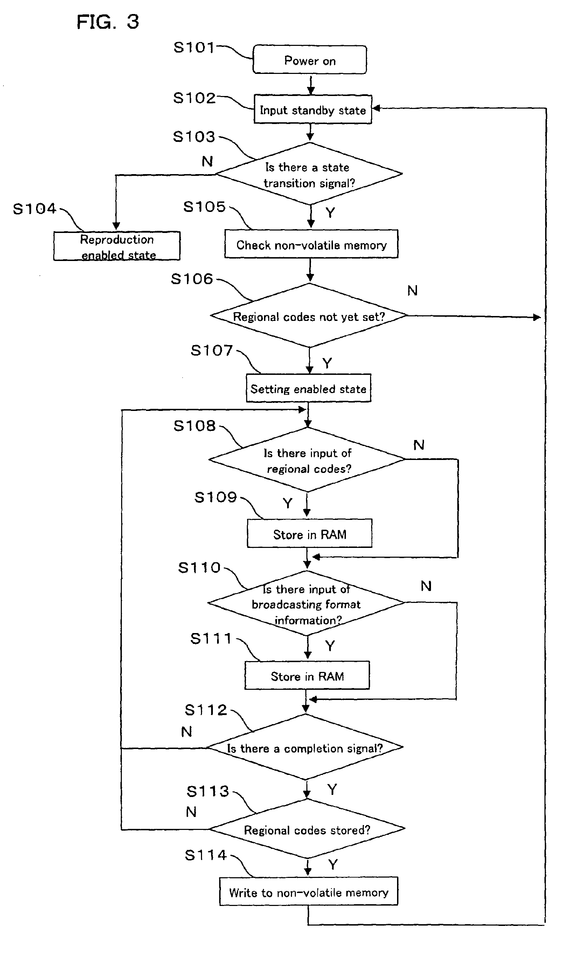

FIG. 3 is a flowchart showing the procedure performed by the control unit (14) in the setting operation performed by the recording medium reproducing apparatus (1). After turning on the power (S101), the recording medium reproducing apparatus (1) is in an input standby state (S102) for a predetermined time (e.g. 10 seconds). During this predetermined time, the control unit (14) determines whether or not a signal urging transition to a state in which the regional code and the broadcasting format can be set has been input from the operation unit (16) (S103). If there is no input signal, then the recording medium reproducing apparatus (1) moves to a state in which the recording medium (2) can be reproduced (S104). If there is signal input, then the control unit (14) reads the regional code, which is stored in the non-volatile memory (15) (S105).

The non-volatile memory (15) stores an unused code as a default value for the regional code, in order to indicate that the regional code is not yet set. In this working example, "0" is stored in the non-volatile memory (15). The control unit (14) determines whether the code that is stored as the regional code is 0, that is, whether the region code is not yet set (S106). If the stored code is not 0, then the regional code has already been set, so that the recording medium reproducing apparatus returns to the input standby state (S102) (but it is also possible to move to the reproduction enabled state (S104)). If the stored code is 0, then the regional code is not yet set, so that the recording medium reproducing apparatus (1) moves to a state in which the regional code and the broadcasting format in the non-volatile memory (15) can be set (also referred to as "setting enabled state") (S107).

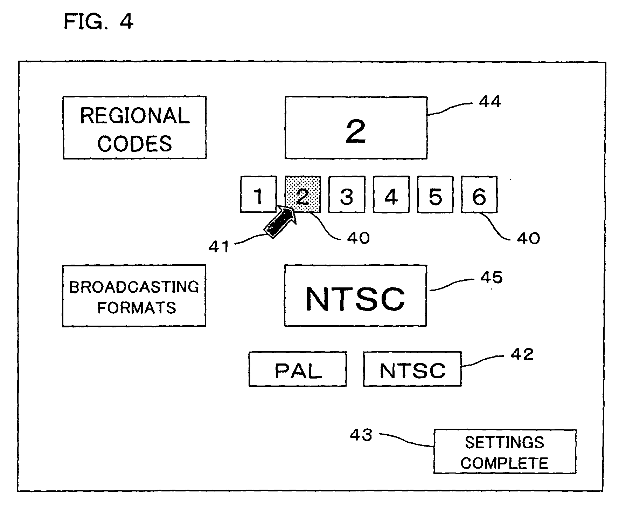

In this state, an image signal is sent from the control unit (14) to the video processor (13), and a settings screen as shown in FIG. 4 is displayed on the display (20). From this settings screen, the regional code and the broadcasting format to which the recording medium reproducing apparatus (1) has been set can be easily confirmed, and can be easily set using the remote controller (21).

The settings screen is provided with display fields (40), which correspond respectively to the regional codes from 1 to 6. By operating the remote controller (21), the manufacturer moves a pointer (41) on the screen to the display field (40) indicating the desired regional code. In order to visualize that it was selected, the selected display field (40) assumes a different display color than the other display fields (40). In this state, by pushing the enter button of the remote controller (21), the regional code is input from the operating unit (16) to the control unit (14). In addition, this regional code is displayed in the display unit (44). FIG. 4 shows a situation in which the regional code "2" has been selected and has been input to the control unit (14).

The control unit (14) determines whether or not there has been an input of the regional code to the control unit (14) in the setting enabled state (S108), and if there has been an input, then the regional code is stored in the RAM (32) of the control unit (S109).

The numerical value (broadcasting format information) indicating the broadcasting format employed by the display device (20) connected to the recording medium reproducing apparatus (1) during the setting operation is stored as the default value in the non-volatile memory (15). In this working example, "1" which represents NTSC is stored. The settings screen is provided with display fields (42) indicating the broadcasting format in the same way as the regional code. In this working example, a further display field (42) representing PAL is provided.

When the manufacturer has placed the pointer (41) on the display field (42) representing the desired broadcasting format, and pushes the enter button of the remote controller (21), broadcasting format information is input from the operating unit (16) to the control unit (14). This broadcasting format is displayed on the display unit (45). The control unit (14) determines whether or not broadcasting format information has been input to the control unit (14) in the setting enabled state (S110), and if broadcasting format information has been input, then it is stored in the RAM (32) of the control unit (14).

In the flowchart shown in FIG. 3, after the input of the regional codes, the broadcasting format is set, but the order of this is unimportant.

In this working example, the value "1", which indicates NTSC, is stored as the default value of the broadcasting format in the non-volatile memory (15), which is due to the fact that in order to display during the setting operation a settings screen as shown in FIG. 4 on the display device (20), the non-volatile memory (15) needs to store the broadcasting format information indicating the broadcasting format used by the display device (20).

For the setting operation, it is not necessarily required to display the settings screen on the display device (20), so that in the same way as with the regional codes, it is also possible to store a value indicating that the broadcasting format information has not yet been set as the default value in the non-volatile memory (15). In this case, a process is necessary that prevents the regional codes from being set with the broadcasting format information not yet set.

When the regional code and the broadcasting format information have been input, the manufacturer inputs a completion signal. For example, by moving the pointer (41) to the display field (43) indicating the completion of the configuration, which is positioned to the lower right of the display screen shown in FIG. 4, and pushing the enter button of the remote controller (21), a completion signal is input from the operating unit (16) to the control unit (14). The control unit (14) determines whether or not a completion signal has been input (S112), and if not, maintains a setting enabled state. If a completion signal has been input, then the control unit (14) determines whether or not the regional code to be set has been stored in the RAM (32) (S113). If the regional code has not been stored, the setting enabled state is maintained. If the regional code has been stored, the non-volatile memory (15) is erased and the regional code and broadcasting format information which were stored in RAM (32) are written to the non-volatile memory (15) (S114). It should be noted that if there is no input of broadcasting format information in the setting enabled state, then the control unit (14) writes the same broadcasting format information as before deletion. After this, the setting enabled state is terminated, and the recording medium reproducing apparatus (1) moves to the input standby state (S102) (but it is also possible to move to the reproduction enabled state (S104)).

With the procedure as given above, the regional code and the broadcasting format are set for the recording medium reproducing apparatus (1). A condition for setting the regional codes and broadcasting formats, is that a "0", which is the number indicating that the regional code has not yet been set, that is, an unused number, is recorded in the non-volatile memory (15), so that the recording medium reproducing apparatus (1) cannot transition to the setting enabled state after a suitable regional code has been stored in the non-volatile memory (15). Consequently, once the manufacturer has set the recording medium reproducing apparatus (1) to the regional code corresponding to the selling region before shipment, ordinary users are not able to change this.

The explanation of the above-mentioned working example is merely an illustration of the present invention, and is not meant to limit the invention as described in the claims, or to reduce the scope of the claims. In addition, the configuration of the various parts of the present invention is not limited to the above-mentioned working example, and various modifications are, of course, possible within the technological scope described in the claims.

### INDUSTRIAL POSSIBILITIES OF APPLICATION

With the recording medium reproducing apparatus of the present invention, the same control program can be used, even if the reproduction limit information specific to the apparatus or the broadcasting format to which the apparatus should be adapted differ. In addition, with the recording medium reproducing apparatus of the present invention, the reproduction limit information and the broadcasting format can be set after assembly, and ordinary users cannot change the reproduction limit information and the broadcasting format.

## Claims

1. A recording medium reproducing apparatus comprising a storage means in which first reproduction limit information is stored, the recording medium reproducing apparatus comparing the first reproduction limit information with second reproduction limit information which is recorded on a recording medium, and reproducing recording information recorded on the recording medium if the first and the second reproduction limit information match,
wherein the storage means is a rewritable non-volatile memory; and
wherein the recording medium reproducing apparatus comprises a control unit which reads the first reproduction limit information from the non-volatile memory and compares the first reproduction limit information with the second reproduction limit information.

2. The recording medium reproducing apparatus according to claim 1, wherein the first reproduction limit information can be stored in the non-volatile memory under the condition that information indicating that the first reproduction limit information has not yet been set is stored in the non-volatile memory instead of the first reproduction limit information.

3. The recording medium reproducing apparatus according to claim 1 or claim 2, wherein broadcasting format information indicating a broadcasting format is stored in the non-volatile memory, and wherein the control unit reads the broadcasting format information from the non-volatile memory and performs control in accordance with the broadcasting format indicated by the broadcasting format information.

4. The recording medium reproducing apparatus according to claim 3, wherein the broadcasting format information can be set or changed under the condition that information indicating that the first reproduction limit information has not yet been set is stored in the non-volatile memory instead of the first reproduction limit information.
